(19) Europäisches Patentamt
European Patent Office
Office européen des brevets

(11) **EP 3 921 677 B1**

(12) **EUROPÄISCHE PATENTSCHRIFT**

(45) Veröffentlichungstag und Bekanntmachung des Hinweises auf die Patenterteilung:
**18.06.2025 Patentblatt 2025/25**

(21) Anmeldenummer: **19805675.6**

(22) Anmeldetag: **20.11.2019**

(51) Internationale Patentklassifikation (IPC):
**G02B 3/00** *(2006.01)*      **G02B 3/02** *(2006.01)*
**G02B 3/06** *(2006.01)*      **G02B 19/00** *(2006.01)*

(52) Gemeinsame Patentklassifikation (CPC):
**G02B 19/0014; G02B 3/02; G02B 3/06; G02B 19/0052**

(86) Internationale Anmeldenummer:
**PCT/EP2019/081902**

(87) Internationale Veröffentlichungsnummer:
**WO 2020/160806 (13.08.2020 Gazette 2020/33)**

(54) **STRAHLKOLLIMATIONSLINSE**

BEAM COLLIMATION LENS

LENTILLE DE COLLIMATION DE RAYONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2019 EP 19155464**

(43) Veröffentlichungstag der Anmeldung:
**15.12.2021 Patentblatt 2021/50**

(73) Patentinhaber: **Fisba AG**
**9016 St. Gallen (CH)**

(72) Erfinder:
• **MOSER, Hansruedi**
**9452 Hinterforst (CH)**
• **WÜST, Pascal**
**9463 Oberriet (CH)**
• **FORRER, Martin**
**9050 Appenzell (CH)**

(74) Vertreter: **Hepp Wenger Ryffel AG**
**Friedtalweg 5**
**9500 Wil (CH)**

(56) Entgegenhaltungen:
DE-T2- 60 304 841      GB-A- 2 510 401
US-A- 6 154 282      US-A1- 2011 103 056
US-A1- 2011 249 342    US-B2- 8 102 581

**Beschreibung**

Die Erfindung betrifft eine Vorrichtung zur Lichtemission, Strahlkollimationslinse und ein Verfahren zum Herstellen einer Strahlkollimationslinse.

Vorrichtungen zur Lichtemission können als HochleistungsDiodenlaser eingesetzt werden. Typischerweise finden derartige Vorrichtungen Anwendung bei Lichtemittern mit einem asymmetrischen Strahlfeld, das eine sogenannte "Fast-Axis" und eine sogenannte "Slow-Axis" aufweist.

Die Fast-Axis bezieht sich auf eine vertikale Achse (senkrecht zum Halbleiterwafer), die senkrecht zur Slow-Axis steht (parallel zur Stirnseite der Halbleiterwafer). Die Slow-Axis und die Fast-Axis sind senkrecht zueinander und orthogonal zur Ausbreitungsrichtung des Strahls (z-Achse). Entlang der Ausbreitungsrichtung hat ein Einzelemitter mit zum Beispiel einer Dimension in der Grössenordnung von 1 micron in der Fast Axis eine numerische Apertur von 0.5 - 0.7 und in der Slow-Axis eine numerische Apertur von 0.05 - 0.2.

Die gebräuchlichsten Kollimatoren für schnelle Achsen sind planzylindrische Linsen. Diese werden verwendet, um eine Kollimation mit geringer Aberration für die Fast-Axis mit hoher numerischer Apertur zu ermöglichen.

Solche Kollimatoren werden typischerweise aus hochwertigem Glas hergestellt. Ein hochbrechendes Material minimiert den maximalen Durchhang der Linse und den Grad der Oberflächenneigung, der erforderlich ist, um die geforderte Brechung zu erreichen. Für unkritische Leistungsanforderungen können auch homogene zylindrische Stablinsen, d.h. Fasern, verwendet werden.

Aus der GB2510401 A ist ein mikrooptisches Element zur Verwendung mit einem Laserdiodenstapel vorgesehen ist, wobei das Element eine Vielzahl von bikonvexen Fast-Axis-Kollimatorelementen umfasst, die als monolithische Anordnung ausgebildet sind. Dabei ist die Anordnung von Einlasslinsen auf einer ersten Oberfläche des Elements und eine Anordnung von Auslasslinsen auf einer zweiten Oberfläche, die der ersten Oberfläche gegenüberliegt, des Elements vorgesehen. Die Anordnung der Einlass- und Auslasslinsen kann der Anordnung einer Vielzahl von Einzelemittern, die in einer Reihe oder in einem zweidimensionalen Feld angeordnet sind, angepasst werden. Das monolithische Element kann unter Einsatz von Laser-Mikrobearbeitung aus Quarzglas hergestellt werden.

Kollimationselemente mit Gläsern, die hohen Transmissionswerte aufweisen, werden vor allem für Diodenlaser in einem Wellenlängenbereich zwischen 800 und 1000nm verwendet.

In einem Wellenlängenbereich kleiner als 550nm, insbesondere im Bereich von 400-500nm, stehen ebenfalls Lichtemitter mit hohen Leistungen zur Verfügung. Die Auswahl an Glasmaterialien mit hohen Transmissionswerten ist für diesen Wellenlängenbereich eingeschränkt.

Ausserdem sind die Verarbeitungsmethoden aufwendig und damit sehr teuer.

Es ist Aufgabe der Erfindung die Nachteile des Standes der Technik zu beheben und insbesondere eine Vorrichtung zur Lichtemission, eine Strahlkollimationslinse sowie ein Verfahren zum Herstellen einer Strahlkollimationslinse zur Verfügung zu stellen, mit welchen kostengünstig eine gute optische Kollimationsqualität zur Verfügung gestellt werden kann.

Die Aufgabe wird gelöst durch die Merkmale der unabhängigen Ansprüche. Bevorzugte Ausführungsformen sind in den abhängigen Ansprüchen definiert.

Die Strahlkollimationslinse umfasst mindestens ein bikonvexes Kollimationselement und ist aus Quarzglas gefertigt.

Die Laserlichtquelle emittiert sichtbares Laserlicht, insbesondere mit Wellenlängen von kleiner oder gleich 550nm, im Speziellen in einem Wellenlängenbereich von 300nm bis 550nm, weiter insbesondere von 400-500 nm.

Bei kleineren Wellenlängen steigen die industriell verfügbaren Leistungen stark an und damit auch die Anforderungen an eine minimale Absorption in der Strahlkollimationslinse. Hohe Leistungen können zu einer starken Erwärmung führen und es besteht das Risiko der Defokussierung und damit einer Verschlechterung der Strahlqualität.

Herkömmliche Fast-Axis-Kollimationselemente mit einem Brechungsindex n von etwa 1.80 zeigen bereits bei kleinen Leistungen eine starke Temperaturerhöhung.

Kollimationselemente aus Quarzglas mit einem Brechungsindex von etwa 1.45 weisen eine geringe Temperaturerhöhung bis zu Leistungen von über 200W auf. Die Strahlqualität kann also über einen grossen Leistungsbereich gewährleistet werden.

In einer vorzugsweisen Ausführung der Vorrichtung weist diese eine Vielzahl von Laserlichtquellen auf. Die Laserlichtquellen können in einem zweidimensionalen Feld angeordnet sein. Bevorzugt sind Laserlichtquellen in einer Reihe nebeneinander angeordnet.

Die Strahlkollimationslinse weist bevorzugt ein Feld von bikonvexen Kollimationselementen auf, das der Anordnung der Laserlichtquellen entspricht. Vorteilhafterweise ist die Strahlkollimationslinse monolithisch ausgebildet.

Der Nachteil des kleineren Brechungsindexes von Quarzglas kann durch eine entsprechende Form der Eintritts- und Austrittsflächen kompensiert werden. Das bikonvexe Kollimationselement hat erfindungsgemäß auf der Austrittsseite eine azylindrische Form und auf der Eintrittsseite eine zylindrische Form.

Mit "zylindrischer" Form ist gemeint, dass der Querschnitt des Kollimationselements eine Kreisform aufweist, während bei einer azylindrischen Form eine Abweichung vom Kreissegment vorliegt, beispielsweise die Form eines Polynoms.

Bevorzugt ist die gesamte Eintrittsfläche des bikonvexen Kollimationselements konvex gekrümmt und/oder die gesamte Austrittsfläche des bikonvexen Kollimationselements ebenfalls konvex gekrümmt. Die Oberfläche des Kollimationselements hat somit eine einfache Form, bei der keine konkaven oder planen Teilflächen vorliegen. Dies erleichtert das Herstellungsverfahren.

Besonders bevorzugt ist die Eintrittsfläche der gesamten Strahlkollimationslinse konvex gekrümmt und/oder die Austrittsfläche der gesamten Strahlkollimationslinse ebenfalls konvex gekrümmt, insbesondere auch dann, wenn die Vorrichtung zur Lichtemission mehrere Emitter umfasst und eine Strahlkollimationslinse für diese mehreren Emitter verwendet wird.

In einer besonders vorteilhaften Ausführungsform der Vorrichtung ist die Strahlkollimationslinse stabförmig ausgebildet. Stabförmig heisst, dass die die Linse zylinderförmig ist und bevorzugt in einer Richtung quer zur Lichtausbreitung, nämlich in Fast-Axis Richtung, länger ist als in der Richtung der Lichtausbreitung.

Die Strahlkollimationslinse kann dabei derart als bikonvexer Zylinder ausgebildet sein, dass er für eine Vielzahl von in einer Reihe angeordneter Laserlichtquellen benutzt werden kann.

Der bikonvexe Zylinder kann mit einem Querschnitt ausgestattet sein, der auf der Eintrittsseite ein Kreissegment aufweist.

Eine solche Strahlkollimationslinse besitzt eine einfache Geometrie und kann daher unaufwendig und kostengünstig hergestellt werden, zum Beispiel in einem Faserziehverfahren.

Stabförmige ausgebildete Strahlkollimationslinsen können ausserdem leicht zu einem Strahlkollimationslinsenfeld für in einem zweidimensionalen Feld angeordnete Laserlichtquellen kombiniert werden, indem Strahlkollimationslinsen zum Beispiel an den Längsseiten aneinander geklebt werden.

Die Aufgabe wird gelöst durch eine Strahlkollimationslinse, insbesondere zur Fast-Axis Kollimation, für eine Vorrichtung zur Lichtemission, wie sie oben beschrieben ist.

Die Strahlkollimationslinse umfasst mindestens ein bikonvexes Kollimationselement und ist aus Quarzglas gefertigt. Die Eintrittsfläche des bikonvexen Kollimationselements ist konvex gekrümmt und die Austrittsfläche des bikonvexen Kollimationselements ist auch konvex gekrümmt, sodass trotz des niedrigen Brechungsindexes des Quarzglases eine ausreichende Brechung erreicht werden kann.

In einer vorteilhaften Ausführungsform weist das bikonvexe Kollimationselement eine Eintrittsfläche mit einer Fläche von $0.2mm^2$-$10\,mm^2$, und/oder mit einer Länge von 2mm-12mm und/oder mit einer Höhe von 0.1mm-0.85mm auf.

Mit Eintrittsfläche ist die der Lichtquelle zugewandte Fläche des bikonvexe Kollimationselements gemeint.

In einer vorteilhaften Ausführungsform weist das bikonvexe Kollimationselement eine Austrittsfläche mit einer Fläche von $0.6\,mm^2$-$30mm^2$ aufweist und/oder mit einer Länge von 2mm-12mm und/oder einer Höhe von 0.3mm-2.5mm auf.

Mit Austrittsfläche ist die der Lichtquelle abgewandte Fläche des bikonvexe Kollimationselements gemeint.

Das bikonvexe Kollimationselement kann auf der Eintrittsseite eine maximale Krümmungstiefe von 0.1mm aufweisen und/oder auf der Austrittsseite eine maximale Krümmungstiefe von 0.5mm.

Das bikonvexe Kollimationselement kann eine Brennweite von 0.2mm bis 1.8mm aufweisen.

Die Angaben der Höhen betreffen die optisch wirksamen Bereiche. Da der Eintritt nah am Emitter ist und eine grosse Divergenz besteht, ist die optisch wirksame Höhe an der Eintrittsseite kleiner als an der Austrittsseite. Das Kollimationselement kann aber so gefertigt sein, dass die Eintritts- und Austrittseiten in etwa gleiche Höhen aufweisen.

Die oben genannten Abmessungen können jeweils auch für die gesamte Strahlkollimationslinse gelten.

In einer bevorzugten Ausführungsform ist die Strahlkollimationslinse in einem Faserziehverfahren hergestellt. Die Strahlkollimationslinse weist dann bevorzugt insgesamt die Form eines bikonvexen Zylinders auf.

Die Umfangsflächen der Strahlkollimationslinse, also die Flächen auf dem Zylindermantel, sind glänzend und formpräzise. Die Strahlkollimationslinse weist keine matten Teilflächen auf dem Umfang auf, auch nicht an den nichtoptischen, nach oben und unten gerichteten Umfangsflächen. An der Umfangsfläche sind weder Sägespuren noch Spuren eines Presswerkzeugs erkennbar.

Die nicht optischen Seitenflächen quer zur Zylinderaches können durch einen Vereinzelungsschritt matt sein, und beispielweise Sägespuren aufweisen.

In einer bevorzugten Ausführungsform ist die Strahlkollimationslinse stabförmig ausgebildet.

Die Aufgabe wird ausserdem gelöst durch ein Verfahren zum Herstellen einer Strahlkollimationslinse wie oben beschrieben mit den folgenden Schritten.

Zunächst wird eine bikonvexe Vorform aus Quarzglas zur Verfügung gestellt. Deren Querschnittsfläche ist insbesondere um einen Faktor 100 bis 10000 grösser als die Querschnittsfläche des Kollimationselements der herzustellenden Strahlkollimationslinse.

Die Vorform wird mit konventionellen Herstellverfahren für Glas, wie Schleifen und Polieren, hergestellt. Die notwendige Formgenauigkeit der Linse kann durch die Skalierung durch eine konventionelle Fertigung einer grossen Vorform mit vertretbarem Aufwand realisiert werden.

Es erfolgt ein Erwärmen der Vorform, insbesondere auf Temperaturen von 2000-2200°C. Dazu wird die Vorform, welche eine zu dem zu fertigen Kollimationselement kongruente Form aufweist, in einen entsprechenden Ofen eingeführt.

Nach dem Erwärmen wird die Strahlkollimationslinse abgezogen, wobei die Skalierung erfolgt, das heisst die Querschnittsfläche verkleinert wird. Dies geschieht typischerweise mit einer Abzugvorrichtung, welche Rollen umfasst. Die Abzugskraft wird an die gewünschte Skalierung angepasst.

Beim Abziehen, nach dem Austritt aus dem Ofen kann die Strahlkollimationslinse noch eine Temperatur von einigen hundert Grad aufweisen, was deutlich unterhalb der Glasübergangstemperatur ist, und ihren Endquerschnitt aufweisen.

Die Abkühlung kann an Luft erfolgen.

Anschliessend können stabförmige Linsen in einer gewünschten Länge abgetrennt werden.

Durch die grosse Skalierung von der Vorform auf das Endteil können die Einzelkomponenten kostengünstig in hohen Stückzahlen hergestellt werden.

Wenn es gewünscht ist, können anschliessend stabförmige Strahlkollimationslinse zu einem zweidimensionalen Kollimationsfeld zusammengeklebt werden.

Die Aufgabe wird ausserdem gelöst durch die Verwendung einer Vorrichtung zur Lichtemission wie sie oben beschrieben ist, zur Bearbeitung von Buntmetallen.

Für die Bearbeitung von Buntmetallen eignen sich kurze Wellenlängen, um eine effiziente Bearbeitung zu ermöglichen.

Hochleistungsdiodenlaser mit kürzeren Wellenlängen können auf einfache und kostengünstige Weise mit einer Strahlkollimationslinse, wie sie oben beschrieben ist, zur Verfügung gestellt werden.

Anhand der folgenden Figuren wird die Erfindung erklärt. Es zeigen:

Figur 1: eine erfindungsgemässe Vorrichtung im Querschnitt;

Figur 2: eine erfindungsgemässe Strahlkollimationslinse in perspektivischer Darstellung;

Figur 3: eine schematische Darstellung der Herstellung einer Strahlkollimationslinse.

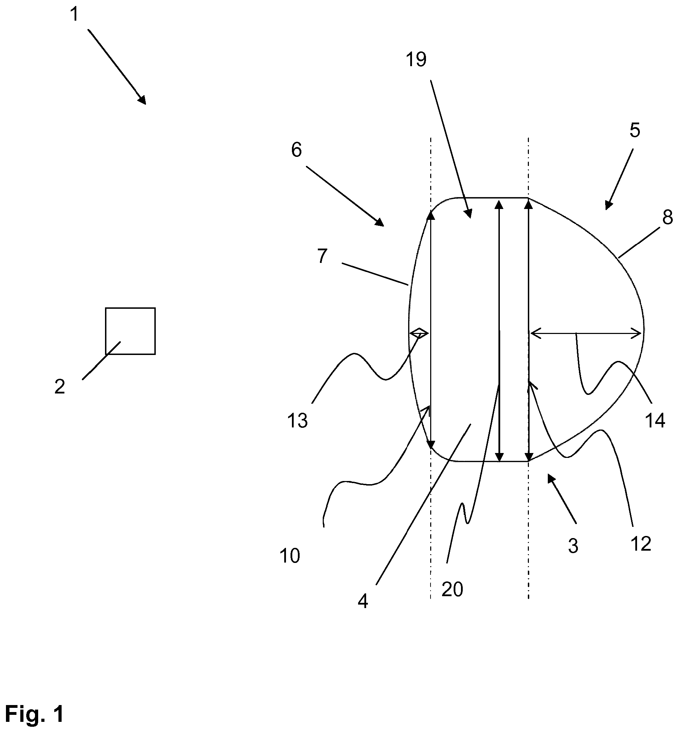

Figur 1 zeigt eine Vorrichtung 1 zur Lichtemission im Querschnitt. Die Vorrichtung 1 umfasst mehrere in einer Reihe angeordnete Laserlichtquellen 2, sowie eine Strahlkollimationslinse 3 zur Fast-Axis Kollimation.

Die Strahlkollimationslinse 3 umfasst bikonvexe Kollimationselemente 4 und ist aus Quarzglas gefertigt.

Die Laserlichtquellen 1 emittieren sichtbares Laserlicht mit Wellenlängen von kleiner 550nm, insbesondere in einem Wellenlängenbereich von 300-500 nm.

Das bikonvexe Kollimationselement 4 weist auf der Eintrittsseite 6 eine maximale Krümmungstiefe 13 von 0.1mm auf.

Das bikonvexe Kollimationselement 4 weist auf der Austrittsseite 5 eine maximale Krümmungstiefe 14 von 0.5mm auf.

Die Eintrittsfläche 7 hat eine Höhe 10 von 0.1mm-0.85mm, die Austrittsfläche 8 eine Höhe 12 von 0.3mm-2.5mm.

Die Strahlkollimationslinse 3 ist bevorzugt so gefertigt, dass ein Grossteil des Bereichs 19 zwischen Eintritts- und Austrittsseite eine konstante Höhe 20 aufweist.

Die Kontur der Austrittsseite 5 kann dem folgenden Polynom folgen.

$$z(h) = \frac{\frac{h^2}{R}}{1 + \sqrt{1 - (1+k)\frac{h^2}{R^2}}} + \sum_{n=1}^{N} A_n \cdot h^n$$

Bevorzugt folgt die Form einem Polynom zehnter Ordnung. Die Koeffizienten sind beispielsweise

R=-0.3mm;
k=-1;
$A_4$=-3.2812 mm$^{-3}$,
$A_6$=16.414 mm$^{-5}$,
$A_8$=-241.567 mm$^{-7}$ und
$A_{10}$=822.595 mm$^{-9}$.

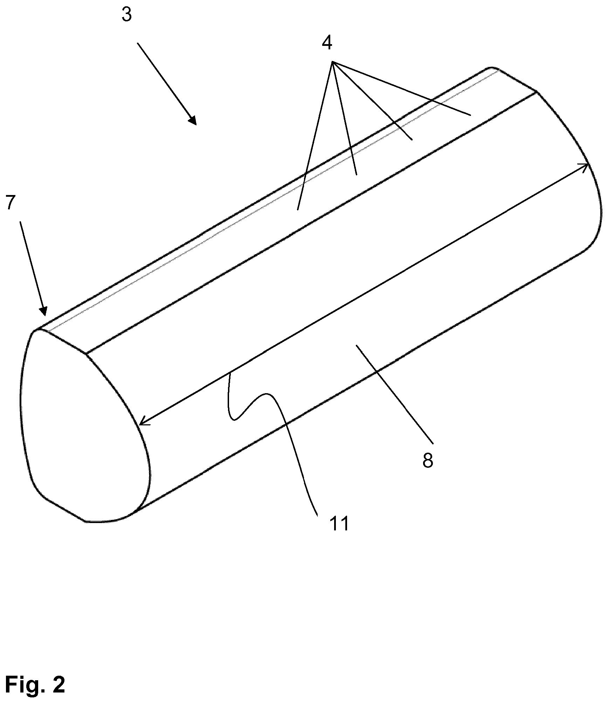

Figur 2 zeigt eine erfindungsgemässe Strahlkollimationslinse 3 in perspektivischer Darstellung. Die Strahlkollimationslinse 3 ist stabförmig ausgebildet, so dass die nebeneinander liegenden bikonvexen Kollimationselemente 4 ineinander übergehen und eine gemeinsame Eintrittsfläche 7 und Austrittsfläche 8 bilden.

Die Eintrittsfläche 7 und die Austrittsfläche 8 haben eine Länge 11 von 2 mm-12 mm.

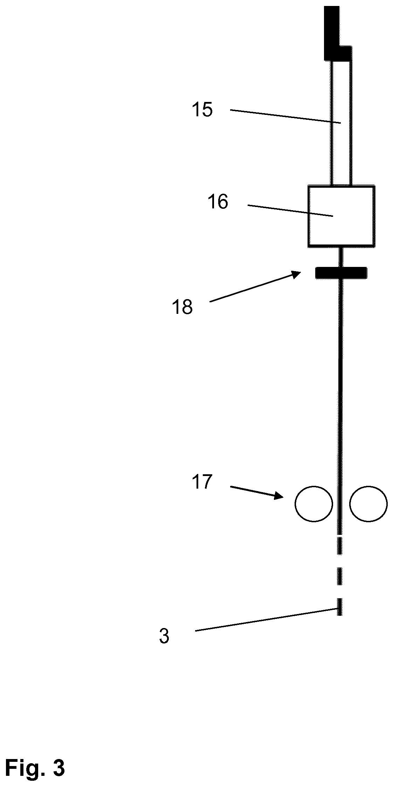

Figur 3 zeigt eine schematische Darstellung der Herstellung einer Strahlkollimationslinse 3.

Zunächst wird eine bikonvexe Vorform 15 aus Quarzglas zur Verfügung gestellt.

In einem Ofen 16 wird die Vorform 15 auf Temperaturen von 2000-2200°C erwärmt.

Nach dem Erwärmen wird die Strahlkollimationslinse 3 mit einer Rollenabzugsvorrichtung 17 abgezogen, wobei die Querschnittsfläche verkleinert wird.

Der Querschnitt wird nach Austritt aus dem Ofen 16 mit einem Messsystem 18 überprüft.

Die Abkühlung erfolgt an Luft.

Anschliessend werden stabförmige Strahlkollimationslinsen 3 in einer gewünschten Länge abgetrennt.

**Patentansprüche**

1. Strahlkollimationslinse für eine Vorrichtung zur Lichtemission zur Fast-Axis Kollimation, wobei die Strahlkollimationslinse mindestens ein bikonvexes Kollimationselement umfasst und aus Quarzglas gefertigt ist, **dadurch gekennzeichnet, dass** das bikonvexe Kollimationselement (4) auf der Austrittsseite (5) eine azylindrische Form aufweist und auf der Eintrittsseite (6) eine zylindrische Form aufweist.

2. Strahlkollimationslinse nach Anspruch 1, wobei das bikonvexe Kollimationselement

    - eine Eintrittsfläche (7) mit einer Fläche von 0.2mm$^2$-10mm$^2$ und/oder eine Eintrittsfläche (7) mit einer Länge (9) von 2 mm-12 mm und/oder eine Eintrittsfläche (7) mit einer Höhe (10) von 0.1mm-0.85mm aufweist und/oder
    - eine Austrittsfläche (8) mit einer Fläche von 0.6mm$^2$-30mm$^2$ aufweist und/oder eine Austrittsfläche (8) mit einer Länge (11) von 2mm-12mm und/oder eine Austrittsfläche (8) mit einer Höhe (12) von 0.3mm-2.5 mm und/oder
    - auf der Eintrittsseite (6) eine maximale Krümmungstiefe (13) von 0.1mm aufweist und/oder
    - auf der Austrittsseite (5) eine maximale Krümmungstiefe (14) von 0.5mm aufweist und/oder
    - eine Brennweite von 0.2mm bis 2mm, bevorzugt von 0.2-1.8mm, aufweist.

3. Strahlkollimationslinse nach Anspruch 1 oder 2, wobei die Strahlkollimationslinse (3) in einem Faserziehverfahren hergestellt ist.

4. Strahlkollimationslinse nach Anspruch 1 bis 3, wobei die Strahlkollimationslinse (3) stabförmig ausgebildet ist.

5. Vorrichtung zur Lichtemission, umfassend mindestens eine Laserlichtquelle (2) sowie mindestens eine Strahlkollimationslinse (3) gemäss einem der Ansprüche 1 bis 4, zur Fast-Axis Kollimation, **dadurch gekennzeichnet, dass** die Laserlichtquelle (2) sichtbares Laserlicht emittiert, insbesondere mit Wellenlängen kleiner als 550nm, weiter insbesondere in einem Wellenlängenbereich von 300-500 nm.

6. Vorrichtung nach Anspruch 5, wobei die Vorrichtung (1) eine Vielzahl von Laserlichtquellen (2) aufweist und die Strahlkollimationslinse (3) bevorzugt ein Feld von bikonvexen Kollimationselementen (4) aufweist,
insbesondere die Laserlichtquellen (2) nebeneinander angeordnet sind.

7. Vorrichtung nach einem der vorhergehenden Ansprüche 5 oder 6, wobei die Strahlkollimationslinse (3) stabförmig ausgebildet ist.

8. Verfahren zum Herstellen einer Strahlkollimationslinse (3) mit mindestens einem bikonvexen Kollimationselement (4) gemäss Anspruch 1 bis 4, umfassend die folgenden Schritte

    - Bereitstellen einer bikonvexen Vorform (15) aus Quarzglas, deren Querschnittsfläche insbesondere um einen Faktor 100 bis 10000 grösser ist als die Querschnittsfläche des Kollimationselements (4) der herzustellenden Strahlkollimationslinse (3);
    - Erwärmen der Vorform (15), insbesondere auf Temperaturen von 2000-2200°C;
    - Abziehen der Strahlkollimationslinse (3);
    - Abkühlen;
    - insbesondere Abtrennen der gewünschten Länge.

**Claims**

1. A beam collimating lens for a light-emitting device for fast-axis collimation, the beam collimating lens comprising at least one biconvex collimating element and being made of quartz glass, **characterized in in that** the biconvex collimating element (4) has an acylindrical shape on the exit side (5) and a cylindrical shape on the entry side (6).

2. The beam collimating lens according to claim 1, wherein the biconvex collimating element comprises

    - an entrance area (7) with an area of 0.2 mm$^2$-10 mm$^2$ and/or an entrance area (7) with a length (9) of 2 mm-12 mm and/or an entrance area (7) with a height (10) of 0.1 mm-0.85 mm and/or
    - an exit area (8) with an area of 0.6 mm$^2$ - 30 mm$^2$ and/or an exit area (8) with a length (11) of 2 mm - 12 mm and/or an exit area (8) with a height (12) of 0.3 mm - 2.5 mm and/or
    - on the entrance side (6) a maximum curvature depth (13) of 0.1 mm and/or
    - on the exit side (5) a maximum curvature depth (14) of 0.5 mm and/or
    - a focal length of 0.2 mm to 2 mm, preferably of 0.2-1.8 mm.

3. The beam collimating lens according to claim 1 or 2, wherein the beam collimating lens (3) is produced in a fiber drawing process.

4. The beam collimating lens according to claim 1 to 3, wherein the beam collimating lens (3) is rod-shaped.

5. A light-emitting device comprising at least one laser light source (2) and at least one beam collimating lens (3) according to one of claims 1 to 4, for fast-axis collimation, **characterized in that** the laser light source (2) emits visible laser light, in particular with wavelengths smaller than 550 nm, more particularly in a wavelength range of 300-500 nm.

6. The device according to claim 5, wherein the device (1) has a plurality of laser light sources (2) and the beam collimating lens (3) preferably has an array of biconvex collimating elements (4),
in particular the laser light sources (2) are arranged side by side.

7. The device according to one of the preceding claims 5 or 6, wherein the beam collimating lens (3) is rod-shaped.

8. A method for producing a beam collimating lens (3) having at least one biconvex collimating element (4) according to claims 1 to 4, comprising the following steps

- providing a biconvex quartz glass preform (15), the cross-sectional area of which is larger, in particular by a factor of 100 to 10,000, than the cross-sectional area of the collimating element (4) of the beam collimating lens (3) to be produced;
- heating the preform (15), in particular to temperatures of 2000-2200°C;
- pulling off the beam collimating lens (3);
- cooling;
- in particular cutting to the desired length.

**Revendications**

1. Lentille de collimation de faisceau pour un dispositif d'émission de lumière pour la collimation à axe rapide, la lentille de collimation de faisceau comprenant au moins un élément de collimation biconvexe et étant fabriquée en verre de quartz, **caractérisée en ce que** l'élément de collimation biconvexe (4) présente une forme acylindrique sur le côté de sortie (5) et une forme cylindrique sur le côté d'entrée (6).

2. Lentille de collimation de faisceau selon la revendication 1, dans laquelle l'élément de collimation biconvexe

- présente une surface d'entrée (7) avec une surface de $0.2mm^2$-$10mm^2$ et/ou une surface d'entrée (7) avec une longueur (9) de 2 mm-12 mm et/ou une surface d'entrée (7) avec une hauteur (10) de 0.1mm-0.85mm et/ou
- présente une surface de sortie (8) avec une surface de $0,6mm^2$-$30mm^2$ et/ou une surface de sortie (8) avec une longueur (11) de 2mm-12mm et/ou une surface de sortie (8) avec une hauteur (12) de 0,3mm-2,5 mm et/ou
- présente sur le côté entrée (6) une profondeur de courbure maximale (13) de 0,1 mm et/ou
- présente sur le côté de sortie (5) une profondeur de courbure maximale (14) de 0,5mm et/ou
- présente une distance focale de 0,2 mm à 2 mm, de préférence de 0,2 à 1,8 mm.

3. Lentille de collimation de faisceau selon la revendication 1 ou 2, dans laquelle la lentille de collimation de faisceau (3) est fabriquée par un procédé d'étirage de fibres.

4. Lentille de collimation de faisceau selon les revendications 1 à 3, dans laquelle la lentille de collimation de faisceau (3) est réalisée en forme de tige.

5. Dispositif d'émission de lumière, comprenant au moins une source de lumière laser (2) ainsi qu'au moins une lentille de collimation de faisceau (3) selon l'une des revendications 1 à 4, pour la collimation à axe rapide, **caractérisé en ce que** la source de lumière laser (2) émet une lumière laser visible, en particulier avec des longueurs d'onde inférieures à 550 nm, plus particulièrement dans une plage de longueurs d'onde de 300 à 500 nm.

6. Dispositif selon la revendication 5, dans lequel le dispositif (1) comprend une pluralité de sources de lumière laser (2) et la lentille de collimation de faisceau (3) comprend de préférence un réseau d'éléments de collimation bi-convexes (4),
en particulier les sources de lumière laser (2) sont disposées les unes à côté des autres.

7. Dispositif selon l'une des revendications précédentes 5 ou 6, dans lequel la lentille de collimation de faisceau (3) est en forme de tige.

8. Procédé de fabrication d'une lentille de collimation de faisceau (3) avec au moins un élément de collimation biconvexe (4) selon les revendications 1 à 4, comprenant les étapes suivantes

- Préparer une préforme biconvexe (15) en verre de quartz, dont la surface de section transversale est notamment supérieure d'un facteur 100 à 10 000 à la surface de section transversale de l'élément de collimation (4) de la lentille de collimation de faisceau (3) à fabriquer ;
- Chauffer la préforme (15), en particulier à des températures de 2000-2200° C ;
- Retirer la lentille de collimation du faisceau (3) ;
- Refroidir ;
- en particulier couper à la longueur souhaitée.

**Fig. 1**

3

4

7

8

11

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2510401 A